# EUROPÄISCHE PATENTSCHRIFT

(11) **EP 2 227 366 B1**
(45) Veröffentlichungstag und Bekanntmachung des Hinweises auf die Patenterteilung: **04.06.2014**
(21) Anmeldenummer: 08801898.1
(22) Anmeldetag: 08.09.2008
(51) Int. Cl.: B29C 44/44, B29C 44/34, B29C 44/58

(54) **VERFAHREN ZUM HERSTELLEN EINES FORMKÖRPERS AUS GESCHÄUMTEM KUNSTSTOFF UND EINRICHTUNG ZUR DURCHFÜHRUNG DES VERFAHRENS**
METHOD FOR PRODUCING A MOLDED PART MADE OF FOAMED PLASTIC AND DEVICE FOR PERFORMING THE METHOD
PROCÉDÉ DE FABRICATION D'UN CORPS MOULÉ EN MATIÈRE PLASTIQUE MOUSSÉE, ET DISPOSITIF POUR LA MISE EN OEUVRE DU PROCÉDÉ

(30) Priorität: 12.01.2008 DE 102008004327; 02.04.2008 DE 102008016883
(43) Veröffentlichungstag der Anmeldung: 15.09.2010
(73) Patentinhaber: Behl GmbH, 97909 Stadtprozelten (DE); Behl Asia Ltd., Hong Kong (HK)
(72) Erfinder: BEHL, ERHARD, 97906 Faulbach (DE); CHI KEUNG, Leung, Hong Kong (HK)
(74) Vertreter: Meissner, Bolte & Partner GbR
(86) Internationale Anmeldenummer: PCT/EP2008/007314
(87) Internationale Veröffentlichungsnummer: WO 2009/086853

(56) Entgegenhaltungen:
- EP-A- 0 259 597
- CH-A- 472 959
- DE-A1- 1 504 494
- JP-A- 9 048 037
- US-A- 4 695 416
- US-A- 5 711 905

## Beschreibung

Die Erfindung bezieht sich auf ein Verfahren zum Herstellen eines Formkörpers aus geschäumtem Kunststoff, bei dem in einen Form-Hohlraum einer als zwei- oder mehrteiliges, öffen- und schließbares Formwerkzeug ausgebildeten Form ein Granulat eingefüllt und durch Erhitzen zum Expandieren gebracht wird, wobei a) Wasserdampf mit einer solchen Temperatur und Dampfnässe sowie einem solchen Dampfdruck in durch in den Wänden des Formwerkzeugs angeordnete, für Dampf und Luft durchlässige Öffnungen in die noch evakuierte Form eingebracht wird, dass das Granulat durch den Wasserdampf und dessen Kondensationswärme auf eine Temperatur erhitzt wird, bei der das Granulat expandiert und die Form mit dem Ergebnis eines homogenen, zusammengesinterten Formkörpers ausschäumt; b) schließlich nach dem Expansionsvorgang das kondensierte Wasser und der Wasserdampf durch Evakuieren der Form und dem Formkörper entzogen und letzterer dadurch stabilisiert und auf Entformungstemperatur abgekühlt wird, so dass er aus der geöffneten Form ausgestoßen werden kann, und wobei c) der dem Form-Hohlraum zugeführte oder von diesem abgeführte Dampf durch an Außenflächen der Form angrenzende Dampfkammern geleitet wird, gemäß dem Oberbegriff des Anspruchs 1.

Ein solches Verfahren sowie eine Einrichtung zu dessen Durchführung sind im wesentlichen bekannt durch die EP 0 259 597 A2. Das Vakuum wird bei dem bekannten Verfahren durch die kombiniert eingesetzten Komponenten einer Kühlkammer, eines Vakuumbehälters und einer Vakuumpumpe bereit gehalten bzw. erzeugt.

Beim Gegenstand nach der CH-A-472 959 (=D2) wird nach der Bedampfung des im Formhohlraum befindlichen Polystyrolgranulats mit Heissdampf über die Heiz- und Kühlkammern 10, 11 beidseits des Formhohlraums über Sprühsysteme ein Wassersprühnebel in die Heiz- und Kühlkammern eingedüst, zum Zwecke, in diesen Kammern einen Unterdruck zu erzeugen und so durch das Anpressen des sich bildenden Formkörpers an die Formkörperwand ein "Verschweissen" der Polystyrolpartikel an der Oberfläche des Formkörpers zu erzielen. Bei diesem gegen die Formkörperwand gerichteten Einsprühen wird letztere zwangsläufig gekühlt. Das Formwerkzeug muss aber zu diesem Zeitpunkt heiß gehalten werden, um eine vorzeitige Verschweissung des Formkörpers zu vermeiden. D.h. es handelt sich bei diesem Verfahrensschritt um eine unerwünschte Kühlung bzw. Energieverschwendung, weswegen versucht wird, den verfahrenstechnischen Nachteil klein zu halten, indem z.B. von der Verwendung gegen die Formhälften gerichteter Sprüh- oder Spritzdüsen abgeraten wird.

Der Erfindung liegt die Aufgabe zugrunde, ein Verfahren der eingangs definierten Art anzugeben, bei dessen Durchführung mehrere Komponenten zur Erzeugung des Vakuums und hierbei vor allem Vakuumpumpen, welche eine Anlage teurer und wartungsintensiver machen, nicht mehr erforderlich sind, und hierbei die Evakuierungsmaßnahmen mit einer ohne Vakuumpumpen auskommenden Vakuum-Erzeugungseinrichtung in die Abfolge der Verfahrensschritte so einzufügen, daß auch ohne Verwendung von Vakuumpumpen ein günstiger Energiehaushalt bei der Herstellung von Formkörpern erreicht werden kann.

Erfindungsgemäß wird die gestellte Aufgabe bei einem Verfahren gemäß Oberbegriff des Anspruchs 1 durch die im Kennzeichen des Anspruchs 1 angegebenen Merkmale gelöst, nämlich dadurch, daß dass ein Vakuumtank mit einer die Unterstützung durch Vakuumpumpen nicht erfordernden Kapazität mit zugehörigem Einspritzkühler und wenigstens einem Rückschlagventil beim Bedampfen und zum Evakuieren des Form-Hohlraums und der Dampfkammern verwendet wird, mit den folgenden Verfahrensschritten:

Vorteilhafte Weiterbildungen des Verfahrens nach der Erfindung sind in den Ansprüchen 2 und 3 angegeben.

Die mit der Erfindung erzielbaren Vorteile sind vor allem darin zu sehen, dass die wirksamen Spülvorgänge über das Rückschlagventil in den gesamten Verfahrensablauf als mehrere Teilschritte zur Erzeugung einer von nicht kondensierbaren Gasen, insbesondere Luft, befreiten Athmosphäre eingeschaltet und jeweils den Einspritz-Kondensations-Vorgängen vorgeschaltet sind. Im Gegensatz zu deem vorstehend erwähnten Verfahren nach (D2) wird beim Erfindungsgegenstand bei dem auf den Verfahrensschritt 4 (Granulaterweichung) folgenden Verfahrensschritt 5 Kühlwasser in die Dampfkammern nicht eingesprüht; die Wände des Formkörpers bleiben heiß, der Nachexpansions- und Verschweissungsvorgang kann ungestört und ohne Energieverschwendung ablaufen, weil lediglich ein Überdruckabbau / Spülvorgang durch das sich öffnende Rückschlagventil stattfindet und der nun im System befindliche Wasserdampf, unter athmosphärischem Druck stehend, eine Voraussetzung bildet, dass durch Kühlwasser-Einspritzen in den Vakuumtank ohne Beanspruchung von Pumpenergie im System ein wirksames Vakuum erzeugt werden kann - eine Voraussetzung zur Durchführung des Verfahrensschrittes nach Anspruch 2.

Gegenstand der Erfindung ist auch eine Einrichtung zur Durchführung des Verfahrens nach Anspruch 1 oder einem der folgenden Ansprüche, welcher sinngemäß die gleiche oben angegebene Aufgabe wie dem Verfahren nach der Erfindung zugrundeliegt und die sich gemäß Oberbegriff des Anspruchs 6 bezieht auf eine Einrichtung zum Herstellen eines Formkörpers aus geschäumtem Kunststoff.

Bei einer vorstehend zitierten gattungsgemäßen Einrichtung wird die gestellte Aufgabe erfindungsgemäß durch die im Kennzeichen des Anspruchs 6 angegebenen Merkmale gelöst.

Vorteilhafte Weiterbildungen der Einrichtung nach der Erfindung sind in den Ansprüchen 7 bis 11 angegeben. - Die mit der Erfindung erzielbaren Vorteile sind vor allem darin zu sehen, daß durch den direkten Anschluß des Vakuumtanks (über Auslaßventile) an die Dampfkammern (bei einem zweiteiligen Formwerkzeug an die erste und zweite Dampfkammer) die Abkühlvorgänge des Formkörpers intensiviert werden können. Dies insbesondere dadurch, daß mit dem autarken Vakuumtank und dem zugehörigen Einspritzkühler ein relativ großvolumiger, zuverlässiger Vakuumerzeuger sowie Dampf- und Kühlluftbeförderer zur Verfügung steht, wodurch das Verfahren und die Einrichtung zu ihrer Durchführung sehr zuverlässig und unabhängig von Störungen oder Wartungsintervallen bei Vakuumpumpen gestaltet werden können.

Weitere Merkmale und Vorteile des Erfindungsgegenstandes, die Verfahrensschritte sowie Aufbau und Wirkungsweise der Einrichtung werden im folgenden anhand eines in der Zeichnung dargestellten Ausführungsbeispiels näher erläutert. In der Zeichnung zeigt:
- Fig. 1: in vereinfachter, z.T. schematischer Darstellung, unter Fortlassung der für das Verständnis der Erfindung nicht erforderlichen Teile, im Aufriss, z.T. im Schnitt, eine Einrichtung zum Herstellen eines Formkörpers mit Formwerkzeug, darin befindlichem Formkörper und einem an das Formwerkzeug angeschlossenen Vakuumtank mit Einspritzkühler;
- Fig. 2: die Einzelheit X aus Fig. 1, vergrößert, d.h. einen Teil der Düsenöffnungen, drei Sprühkegel und einen Ausschnitt der Form und des Formkörpers, wobei der Füllinjektor weggelassen ist.

Im folgenden werden zunächst der Aufbau der Einrichtung und sodann ihre Wirkungsweise und der Verfahrensablauf beschrieben.

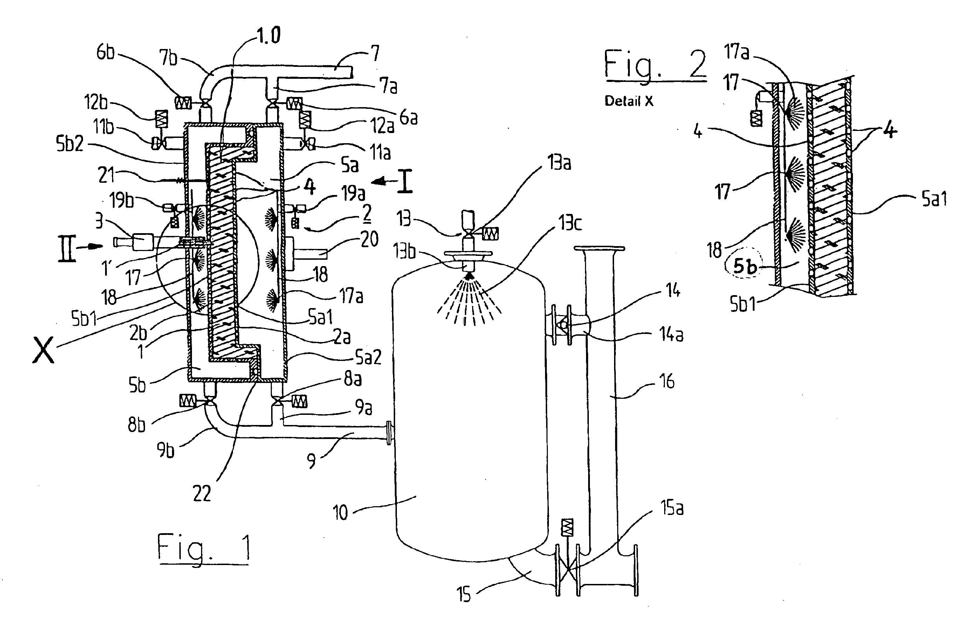

Bei der in Fig. 1 dargestellten Einrichtung zum Herstellen eines Formkörpers 1 aus geschäumtem Kunststoff wird ein in den Hohlraum 1.0 des Formwerkzeugs 2 einer zwei- oder mehrteiligen, öffen- und schließbaren Form einfüllbares Granulat 1' durch Erhitzen zum Expandieren gebracht. Dargestellt ist eine zweiteiliges Formwerkzeug mit den beiden Formwerkzeugteilen 2a, 2b. Als Kunststoffe für den Formkörper 1 kommen insbesondere Polystyrol (EPS) oder Polypropylen (EPP) in Betracht, wobei ersteres beim Aufschäumen auf ca. 118° C aufgeheizt und einem Druck von etwa 115 bar ausgesetzt wird. Bei EPP sind die entsprechenden Werte 145° C und 3,5 bar.

Zum Einfüllen des aufzuschäumenden Granulats 1' in die Form 2 bzw. in den Form-Hohlraum 1.0 ist diese, d.h. der Form-Hohlraum 1.0, mit einem Füllinjektor 3 verbunden. Mit der Form 2 und dem Form-Hohlraum 1.0 über Öffnungen 4 kommunizierende Dampfkammem umgeben im wesentlichen die Form 2. Die Öffnungen 4 sind vorzugsweise als Düsenöffnungen ausgebildet und über die Wandpartien 5a1, 5b1 der Formwerkzeugteile 2a, 2b verteilt (aus Fig. 2 besser ersichtlich). Die Düsenöffnungen 4 (deren Düsenweite z.B. 0,8 mm beträgt) werden insbesondere durch Düseneinsätze gebildet, die in passenden Bohrungen von z.B. 10 mm Durchmesser sitzen. Dadurch wird eine strömungsgünstige, gleichförmige Bauweise für alle Düsenöffnungen 4 gewährleistet. Bei dem dargestellten zweiteiligen Formwerkzeug 2 für die Form sind zwei Dampfkammern 5a, 5b vorgesehen. Dampfkammer 5a (erste Dampfkammer) ist auf der Auswerfseite I des Formkörpers 1 angeordnet und vom ersten Formwerkzeugteil 2a umschlossen, Dampfkammer 5b (zweite Dampfkammer) ist auf der Füllinjektorseite II angeordnet und vom zweiten Formwerkzeugteil 2b umschlossen. Mit den Dampfkammern 2a, 2b kommunizieren jeweils eingangsseitig Dampfventile 6a, 6b und entsprechende Dampfleitungen 7a, 7b, welch letztere in die gemeinsame Dampfleitung 7 übergehen. Auslaßseitig kommunizieren die Dampfkammern 2a, 2b jeweils mit den Auslaßventilen 8a bzw. 8b, deren Dampf-/Luftleitungen 9a, 9b in die gemeinsame, in den Vakuumtank 10 mündende Dampf-/Luftleitung 9 übergehen. Ferner sind an die Dampfkammern 5a, 5b jeweils Luftleitungen 11a bzw. 11b mit Belüftungsventilen 12a, 12b angeschlossen. Über die erwähnten Düsenöffnungen 4 können die beiden Dampfkammer 5a, 5b jeweils mit dem Form-Hohlraum 1.0 kommunizieren, vergl Detail X nach Fig. 2. Generell gilt, daß das Volumen des Vakuumtanks 10 zum Volumen der beiden Dampfkammern 5a, 5b und des Formhohlraums 1.0 sich mindestens etwa wie 3 zu 1 verhalten.

Wie erwähnt, ist die Form bzw. der Formwerkzeugteil 2 zweiteilig; sie könnte auch im Bedarfsfalle nicht nur aus zwei sondern aus mehr als zwei Formwerkzeugteilen bestehen. Der von den Formhälften oder -teilen umgebene Form-Hohlraum 1.0 ist jedenfalls zum Auswerfen des fertig ausgeschäumten Formkörpers 1 öffenbar und zum Beschicken mit neuem, expandierbarem Granulat wieder schließbar.

Zum Evakuieren des Form-Hohlraumes 1.0 über die Düsenöffnungen 4 und der Dampfkammern 5a, 5b und zum jeweils vorangehenden Herausspülen von in diesen Räumen/ Kammern 1.0; 5a, 5b enthaltenen Luftmengen mittels Wasserdampf-Spülung über die öffen-und schließbare Dampfventile 6a, 6b ist der schon erwähnte Vakuumtank 10 mit Einspritzkühler 13 solcher Kapazität verwendet, daß die Evakuierungs- und Spülvorgänge mit dem Vakuumtank 10 autark ohne Unterstützung durch Vakuumpumpen durchführbar sind, wobei durch mindestens eine mit dem Form-Hohlraum 1.0 und den Dampfkammern 5a, 5b über die steuerbaren Auslaßventile 8a, 8b kommunizierende Dampf-/ Luftleitung 9 hindurch dem Vakuumtank 10 die vom Form-Hohlraum1.0 und von den Dampfkammern 5a, 5b stammenden Dampf und Luftmengen zuführbar, von diesen die Dampfmengen durch Einspritzen von Kühlwasser unter Vakuumerzeugung kondensierbar und die eingeleiteten Luftmengen über mindestens ein Rückschlagventil 14 nach außen abführbar sind. Das dem Einspritzkühler 13 zugeordnete Einspritzkühler-Ventil ist mit 13a, die Einspritzdüse mit 13b und der schematisch dargestellte Sprühkegel mit 13c bezeichnet. Am Grunde des Vakuumtanks 10 ist die Ablaßleitung 15 angeschlossen, welche über das Auslaßventil 15a in das Fallrohr 16 mündet. In den oberen Bereich des Fallrohrs mündet über ein Leitungsstück 14a das an den Vakuumtank 10 angeschlossene Rückschlagventil 14.

Aus Fig. 1 ist ersichtlich, daß bei dem dargestellten zweiteiligen Formwerkzeug 2 die beiden Formwerkzeugteile 2a, 2b die erste bzw. zweite Dampfkammer 5a bzw. 5b praktisch umschließen und je eine Innenwand 5a1 bzw. 5b1 der Dampfkammern von den an den Form-Hohlraum 1.0 direkt angrenzenden Formwerkzeug-Wänden gebildet ist. Auf der der Form-Auswerfseite I entgegengesetzten Seite II (Füllinjektor-Seite) des Form-Hohlraumes 1.0 ist der durch die Formwerkzeug-Wand 5b1 in den Form-Hohlraum 1.0 mündender Füllinjektor 3 für Granulat angeordnet, welcher die Außenwand 5b2 des Formwerkzeugs 2 und die zweite Dampfkammer 5b dampfdicht durchdringt. Wie man sieht, sind beide Formwerkzeug-Wände 5a1, 5b1 mit den Düsenöffnungen 4 versehen. Dadurch wird eine schnelle gut steuerbare Aufheizung und Abkühlung des Formkörpers 1 gewährleistet.

An den Innenseiten der Außenwände 5a2, 5b2 des Formwerkzeugs 2, vorzugsweise auf der Auswerf-Seite I und der gegenüberliegenden Seite II, sind (wegen ihrer kleinen Größe nicht erkennbare) Sprühdüsen an den Stellen 17 befestigt (siehe auch Fig. 2), die zwecks Kühlung der Form 2, des Form-Hohlraumes 1.0 und des darin befindlichen Formkörpers 1 sowie des Volumens der Dampfkammern 5a, 5b-zum Versprühen von quer zu den Dampfkammern gerichteten Wasser-Sprühkegeln 17a eingerichtet sind. Jeweils an der Innenseite der Formwerkzeug-Außenwände 5a2, 5b2 ist eine Sprühdüsen-Leitung 18 für mehrere Sprühdüsen 17, und an dem Außenseiten des Formwerkzeugs 2 sind jeweils mit einer Sprühdüsen-Leitung 18 verbundene Sprühventile 19a, 19b befestigt. Mit dem an der Außenwand 5a2 des Formwerkzeugteils 2a gelagerten Hydraulikzylinder 20 kann man Formwerkzeugteil 2a unter Öffnung der Teilfugen 22 zwischen (2a) und (2b) vom gegenüberliegenden Formwerkzeugteil 2b - nach Lockerung in kleinen hin- und hergehenden Lockerungsbewegungen - abziehen. Mit dem Auswerfer 21 in Form eines aktivierbaren Stössels, gelagert in der Wand 5b2, kann man den Auswerfvorgang des Formkörpers 1 initieren.

Mit der vorstehend geschilderten Einrichtung, auch als "Motorless Vacuum System" zu bezeichnen, kann man das im folgenden erläuterte Verfahren verwirklichen, d.h. das Verfahren zum Herstellen eines Formkörpers 1 aus geschäumten Kunststoff läuft folgendermaßen ab:

Zunächst werden die zweiteiligen oder auch mehrteiligen Formwerkzeughälften 2a, 2b geschlossen. Anschließend wird durch Öffnen der Dampfventile 6a, 6b durch Einleiten von Wasserdampf die Luft aus den Dampfkammern 5a und 5b sowie aus dem Vakuumtank 10 über das Rückschlagventil 14 ausgespült. Unmittelbar vor dem Einfüllen des Granulats (1') in den Form-Hohlraum 1.0 wird zeitlich verzögert zum Spülvorgang bei sich schließenden Dampfventilen (6a, 6b) durch Wassereinspritzen in den Vakuumtank (10) eine Wasserdampf-Kondensation und damit im Rahmen einer ersten Evakuierung ein Unterdruck von vorzugsweise ca. 0,2 - 0,1 bar im Tank (10) und in dem damit verbundenen Form-Hohlraum (1.0) herbeigeführt.

Nachdem der gewünschte Unterdruck im System erreicht ist, wird über den Füllinjektor 3 ein expandierbares bzw. ein komprimierbares Granulat 1' mit Überdruck von bis zu 3 bar in den Form-Hohlraum 1.0 gefüllt. Durch den im Form Hohlraum 1.0 vorhandenen Unterdruck und durch den Füllüberdruck wird eine sehr schnelle und gleichmäßige Füllung des Form-Hohlraums 1.0 mit weitestgehend homogener Packungsdichte erreicht.

Nach dem Schließen des Füllinjektors 3 wird über die Dampfventile 6a und 6b Dampf in die Dampfkammern 5a und 5b eingelassen und über den Vakuumtank 10 und das Rückschlagventil 14 die Luft im gesamten System ausgespült. Anschließend wird durch Querbedampfen von beiden Seiten die Luft zwischen den Granulat-Partikeln ausgespült. Danach werden die beiden Auslassventile 8a und 8b geschlossen, und es wird ein Überdruck in den Dampfkammern 5a, 5b von bis zu 3 bar aufgebaut. Dadurch wird im Form-Hohlraum 1.0 ein Dampfdruck mit einer Temperatur entsprechend der Erweichungstemperatur des Granulats 1' erzeugt, wobei der Dampf auf dem Granulat kondensiert und die Kondensationsenergie an das Granulat abgegeben wird. Dabei expandiert das Granulat zu einem Formkörper 1 der den Formhohlraum 1.0 vollständig ausfüllt.

Nach dem Expansionsvorgang werden die Dampfventile 6a und 6b geschlossen und die Ablassventile 8a und 8b wieder geöffnet. Der Überdruck wird über das Rückschlagventil 14 am Vakuumbehälter10 abgebaut. Im gesamten System befindet sich ausschließlich Wasserdampf unter athmosphärischem Druck, der durch Einspritzen von Wasser über das Ventil 13a und Sprühdüse 13b im Vakuumbehälter 10 kondensiert.

Gleichzeitig wird Wasser über die Ventile 19a und 19b in die Kühlleitung 18 und über die Sprühdüsen 17 in die Dampfkammern 5a und 5b eingespritzt und die Werkzeugtemperatur hierdurch geringfügig gesenkt. Das hierbei angefallene Wasser wird über die Ablassventile 8a und 8b in den Vakuumbehälter 10 geleitet und dort gesammelt.

Dadurch entsteht im Form-Hohlraum 1.0 erneut ein Unterdruck. Dieser bewirkt, dass das Kondensat wieder in den dampfförmigen Zustand übergeht und eine Kühlung des Formkörpers 1 eintritt, da die Verdampfungswärme dem Formkörper 1 entzogen und durch Unterdruck umgehend abgeführt wird. Der hierbei entstandene Wasserdampf wird im Vakuumtank 10 durch Wassereinspritzen kondensiert. Dieser Zustand wird während der gesamten Stabilisierungsphase aufrecht erhalten.

Danach wird zum Lösen des Formkörpers das Vakuum in der Dampfkammer 5b aufrecht erhalten,wobei die Ablassventile 8a und 8b geschlossen werden. Gegenüber wird das Belüftungsventil 12a geöffnet und somit die Dampfkammer 5a mit atmosphärischer Luft gefüllt. Über den Hydraulikzylinder 20 werden die Formhälften 2a, 2b einige Millimeter geöffnet. Anschließend werden die Formhälften wieder geschlossen und das im Vakuumtank 10 gespeicherte Vakuum in die Dampfkammer 5a über Auslassventil 8a eingeleitet, wobei das Belüftungsventil 12a geschlossen wird. Gegenüber wird durch Öffnen des Belüftungsventils 12b die Dampfkammer 5b mit atmosphärischer Luft gefüllt. Durch abwechselnde Beaufschlagung der Dampfkammer 5b mit Vakuum und der gegenüberliegenden Dampfkammer 5a mit athmosphärischer Luft bzw. umgekehrt und jeweils kurzzeitiges Öffnen und Schließen des Formwerkzeugs 2 nach jedem dieser Schritte um wenige Millimeter wird eine Lockerung des Formkörpers 1 erreicht. Beim wiederholten Öffnen ist der Formkörper 1 von den beiden Formwerkzeugteilen 2a und 2b gelöst und kann anschließend mit Unterstützung von Auswerfstößel 21 entformt werden.

Wie eingangs bereits erwähnt, werden als aufschäumbarer Kunststoffe in Granulatform insbesondere verwendet:
Polystyrol (Kurzbezeichnung: PS), das in expandierter Form als EPS bezeichnet wird, wobei die Expansionstemperatur bei ca. 118° C und der Expansionsdruck bei ca. 1,5 bar liegen; oder
Polypropylen (Kurzbezeichnung: PP), in expandierter Form als EPP bezeichnet, wobei die Expansionstemperatur bei ca. 145° und der Expansionsdruck bei ca. 3,5 bar liegen.

Die aufgeschäumten Kunststoffe mit ihrer porösen, zellartigen Struktur unterscheiden sich von kompakten Kunststoffen vor allem durch geringers Raumgewicht, ferner verminderte Wärmeleitfähigkeit, verbesserte Schallabsorption und leichte mechanische Verarbeitbarkeit. PS und PP gehören zur Gruppe der thermoplastischen Polymerisate. In aufgeschäumter Form haben sie eine große Bedeutung als Wärme- und Schall-Isolierstoffe sowie als Verpackungs-und Polstermaterialien. Die genannten Kunststoffe sind bevorzugte Beispiele, ohne daß z.B. andere geeignete Kunststoffe, wie Polyurethane, die zur Herstellung von PUR-Weichschaumstoffen und PUR-Hartschaumstoffen verwendet werden, ausgeschlossen sind:

### Bezugszeichenliste

1 Formkörper
1.0 Form-Hohlraum
1' Granulat
2 Form oder Formwerkzeug
2a, 2b Formwerkzeugteile
3 Füllinjektor
4 Düsenöffnungen
5, 5a, 5b Dampfkammern
5a1, 5b1 Innenwände an (5a), (5b) bzw. Formwerkzeug-Wände
5a2 Außenwand von (5) auf Seite I
5b2 Außenwand von (5) auf Seite II
I Auswerfseite
II Füllinjektor-Seite
6a, 6b Dampfventile
7a, 7b Dampfleitungen
7 Dampfleitung, gemeinsame
8a, 8b Auslassventile
9 Dampf-/Luftleitung, gemeinsame
9a, 9b Dampf-/Luftleitungen
10 Vakuumtank
11a, 11b Luftleitungen
12a, 12b Belüftungsventile
13 Einspritzkühler
13a Einspritzkühler-Ventil
13b Einspritzdüse
13c Sprühkegel
14 Rückschlagventil
14a Leitungsstück an (14)
15 Ablassleitung
15a Auslassventil
16 Fallrohr
17 Befestigungsstellen der Sprühdüsen
17a Sprühkegel
18 Sprühdüsen-Leitung
19a, 19b Sprühventile
20 Hydraulikzylinder
21 Auswerfer
22 Teilfugen

## Patentansprüche

1. Verfahren zum Herstellen eines Formkörpers (1) aus geschäumtem Kunststoff, bei dem in einen Form-Hohlraum (1.0) einer als zwei- oder mehrteiliges, öffen- und schließbares Formwerkzeug (2a, 2b) ausgebildeten Form (2) ein Granulat (1') eingefüllt und durch Erhitzen zum Expandieren gebracht wird, wobei
a) Wasserdampf mit einer solchen Temperatur und Dampfnässe sowie einem solchen Dampfdruck in durch in den Wänden des Formwerkzeugs angeordnete, für Dampf und Luft durchlässige Öffnungen in die noch evakuierte Form (2) eingebracht wird, dass das Granulat (1') durch den Wasserdampf und dessen Kondensationswärme auf eine Temperatur erhitzt wird, bei der das Granulat (1') expandiert und die Form (2) mit dem Ergebnis eines homogenen, zusammengesinterten Formkörpers (1) ausschäumt;
b) schließlich nach dem Expansionsvorgang das kondensierte Wasser und der Wasserdampf durch Evakuieren der Form (2) und dem Formkörper (1) entzogen und letzterer dadurch stabilisiert und auf Entformungstemperatur abgekühlt wird, so dass er aus der geöffneten Form (1) ausgestoßen werden kann, und wobei
c) der dem Form-Hohlraum (1.0) zugeführte oder von diesem abgeführte Dampf durch an Außenflächen der Form (2) angrenzende Dampfkammern (5, 5a, 5b) geleitet wird, wobei beim Evakuieren des Form-Hohlraumes (1.0) und der Dampfkammern (5a, 5b) und zum jeweils vorangehenden Herausspülen von in den genannten Räumen enthaltenen Luftmengen mittels Wasserdampf-Spülung über auf und zu steuerbare Dampfventile (6a, 6b) und die für Dampf und Luft durchlässigen Öffnungen (4) in der Formwerkzeug-Wand (5a1, 5b1) sowie über auf und zu steuerbare Auslassventile und - Leitungen (8a, 8b; 9) ein Vakuumtank (10) mit einem Einspritzkühler (13) solcher Kapazität verwendet wird, dass die Evakuierungs- und Spülvorgänge mit dem Vakuumtank (10) autark ohne Unterstützung durch Vakuumpumpen durchführbar sind, und wobei durch mindestens eine mit dem Form-Hohlraum (1.0) und den Dampfkammern (5a, 5b) kommunizierende, an den Vakuumtank (10) angeschlossene Dampf-/Luftleitung (9) hindurch dem Vakuumtank (10) die vom Form-Hohlraum (1.0) und den Dampfkammern (5a, 5b) stammenden Dampf- und Luftmengen zugeführt, von diesen die Dampfmengen durch Einspritzen von Kühlwasser unter Vakuumerzeugung kondensiert und die eingeleiteten Luftmengen über mindestens ein Rückschlagventil (14) nach außen abgeführt werden.

2. Verfahren nach Anspruch 1, **dadurch gekennzeichnet, dass** bei einem ersten Spülvorgang durch dem Form-Höhlraum (1.0) und den Dampfkammern (5a, 5b) einlassseitig zugeführte Spüldampfmengen die im Form-Hohlraum (1.0) und den Dampfkammern (5a, 5b) enthaltenen Luftmengen über die geöffneten Auslassventile (8a, 8b) und die Dampf-/Luftleitung (9) in den Vakuumtank (10) und von diesem über die mindestens eine Rückschlagventil (14) nach außen abgeführt werden, wobei unmittelbar vor dem Einfüllen des Granulats (1') in den Form-Hohlraum (1.0) zeitlich verzögert zum Spülvorgang bei sich schließenden Dampfventilen (6a, 6b) durch Wassereinspritzen in den Vakuumtank (10) eine Wasserdampf-Kondensation und damit im Rahmen einer ersten Evakuierung ein Unterdruck im Tank (10) und in dem damit verbundenen Form-Hohlraum (1.0) herbeigeführt wird.

3. Verfahren nach Anspruch 1 oder 2, **dadurch gekennzeichnet, dass** bei einem zweiten Spülvorgang nach dem Einfüllen des Granulats (1') in den Form-Hohlraum (1.0) zunächst Luftmengen durch einlassseitig zugeführte Spüldampfmengen aus dem Form-Hohlraum (1.0) und den Dampfkammern (5, 5a, 5b) über die für Dampf und Luft durchlässigen Öffnungen (4), geöffnete Auslassventile (8a, 8b) und die Dampf-/Luftleitung (9) in den Vakuumtank (10) und über die Rückschlagventil (14) nach außen befördert werden, bevor im Form-Hohlraum (1.0) und in den Dampfkammern (5a, 5b) bei geschlossenen Auslassventilen (8a, 8b) durch Dampfbeaufschlagung ein Überdruck von bis zu 3 bar und im Zusammenwirken mit der Dampfkondensationswärme eine Erweichungstemperatur für das Granulat (1') erzeugt werden.

4. Verfahren nach einem der Ansprüche 1 bis 3, **dadurch gekennzeichnet, dass** bei einem dritten Spülvorgang nach abgeschlossener Expansion des Granulats (1') zunächst die Dampfventile (6a, 6b) geschlossen und die Auslassventile (8a, 8b) zwecks Herstellung der Verbindung zum Vakuumtank (10) wieder geöffnet werden, wobei ein Überdruckabbau durch das Rückschlagventil (14) stattfindet und der in den Vakuumtank (10) einströmende Dampf durch Kühlwasser-Einspritzen in den Vakuumtank (10) zur Kondensation gebracht wird, dass über Sprühdüsen (17) Kühlwasser in die Dampfkammern (5a, 5b) gesprüht wird und über die Auslassventile und -Leitungen (8a, 8b; 9) in den Vakuumtank (10) geleitet und darin gesammelt wird, wobei ein Unterdruckaufbau im Vakuumtank (10) und dem damit kommunizierendem Form-Hohlraum (1.0) herbeigeführt wird (zweite Evakuierung) und das verdampfende Kondensat zur Kühlung des expandierten und sich stabilisierenden Formkörpers (1) beiträgt sowie in Dampfform in den Vakuumtank (10) abgeführt und dort mittels der Einspritzkühlung kondensiert wird.

5. Verfahren nach Anspruch 4, **dadurch gekennzeichnet, dass** das Vakuum in einer (5b) der beiden Dampfkammern (5a, 5b) aufrechterhalten wird und die Auslassventile (8a, 8b) geschlossen werden und dass sodann ein Belüftungsventil (12a) der gegenüberliegenden Dampfkammer (5a) zwecks Füllung letzterer mit athmosphärischer Luft geöffnet wird und dass im Rahmen eines Entformungsvorgangs die Auslassventile (8a, 8b) geschlossen werden und die folgenden Entformungsschritte abwechselnd aufeinanderfolgen:
a) in der Dampfkammer (5b), die sich auf der Seite (II) des Füllinjektors (3) befindet, wird das Vakuum aufrechterhalten, und die gegenüberliegende Dampfkammer (5a) wird mit athmosphärischer Luft gefüllt, wobei die Formwerkzeuge (2a, 2b) bis zu einem Spalt von wenigen Millimetern geöffnet werden,
b) nach dem Schließen des Formwerkzeugs (2) wird das Belüftungsventil (12a) der Dampfkammer (5a) geschlossen und diese durch Verbinden mit dem Vakuumtank (10) über das sich öffnende Auslassventil (8a) evakuiert sowie die injektorseitige Dampfkammer (5b) über das zugehörige Belüftungsventil (12b) mit athmosphärischer Luft gefüllt, wobei die Formwerkzeugteile (2a, 2b) bis zu einem kleinen Spalt von wenigen Millimetern geöffnet werden,
c) je nach dem Lockerungsgrad des Formkörpers (1) genügen die vorstehenden beiden Schritte (a) und (b) oder sie werden wie-derholt, bis der Formkörper (1) von beiden Formwerkzeugteilen (2a, 2b) gelöst und anschließend ausgeworfen werden kann.

6. Einrichtung, zur Durchführung des Verfahrens nach Anspruch 1 oder einem der folgenden Ansprüche zum Herstellen eines Formkörpers (1) aus geschäumtem Kunststoff, bei dem ein in den Form-Hohlraum (1.0) einer zwei- oder mehrteiligen, öffen- und schließbaren Form (2) einfüllbares Granulat (1') durch Erhitzen zum Expandieren gebracht wird, wobei
a) zum Einfüllen des aufzuschäumenden Granulats (1') die Form (2) mit einem Füllinjektor (3) verbunden ist;
b) an mit dem Form-Hohlraum (1.0) über für Dampf und Luft durchlässige Öffnungen (4) kommunizierende Dampfkammern (5, 5a, 5b) eingangsseitig Dampfventile (6a, 6b) und entsprechende Dampfleitungen (7, 7a, 7b) sowie Luftleitungen (9) mit Belüftungsventilen (12a, 12b), ferner ausgangsseitig über Auslassventile (8a, 8b) und mindestens eine Dampf-/Luftleitung (9) eine Vakuumeinrichtung angeschlossen und je eine Dampfkammer (5a, 5b) je einem Formwerkzeugteil (2a, 2b) zugeordnet und an die Außenflächen der Formwerkzeugteile (2a, 2b) angrenzend angeordnet sind,
c) die Form (2) mindestens zweiteilig und der von den Form-werkzeughälften oder -teilen (2a, 2b) umgebene Form-Höhlraum (1.0) zum Auswerfen des fertig ausgeschäumten Formkörpers (1) öffenbar und zwecks Beschickens mit neuem, expandierbarem Granulat (1') wieder schließbar ist, wobei
zum Evakuieren des Form-Hohlraumes (1.0) über die für Dampf und Luft durchlässigen Öffnungen (4) und der Dampfkammern (5a, 5b) und zum jeweils vorangehenden Herausspülen von in dem Form-Hohlraum (1.0) und den Dampfkammern (5a, 5b) enthaltenen Luftmengen mittels Wasserdampf-Spülung über öffen- und schließbare Dampfventile (6a, 6b) ein Vakuumtank (10) mit Einspritzkühler (13) solcher Kapazität verwendet ist, dass die Evakuierungs- und Spülvorgänge mit dem Vakuumtank (10) autark ohne Unterstützung durch Vakuumpumpen durchführbar sind, und wobei durch mindestens eine mit dem Form-Hohlraum (1.0) und den Dampfkammern (5a, 5b) über steuerbare Auslassventile (8a, 8b) kommunizierende Dampf-/Luftleitung (9) hindurch dem Vakuumtank (10) die vom Form-Hohlraum (1.0) und von den Dampfkammern (5a, 5b) stammenden Dampf- und Luftmengen zuführbar, von diesen die Dampfmengen durch Einspritzen von Kühlwasser unter Vakuumerzeugung kondensierbar und die eingeleiteten Luftmengen über mindestens ein Rückschlagventil (14) nach außen abführbar sind.

7. Einrichtung nach Anspruch 6, **dadurch gekennzeichnet, dass** bei einem zweiteiligen Formwerkzeug (2) die beiden Formwerkzeugteile (2a, 2b) je eine erste und zweite Dampfkammer (5a, 5b) umschließen und je eine Innenwand (5a1, 5b1) der Dampfkammern von den an den Form-Hohlraum (1.0) direkt angrenzenden Formwerkzeug-Wänden gebildet ist.

8. Einrichtung nach Anspruch 7, **dadurch gekennzeichnet, dass** die Formwerkzeug-Wände (5a1, 5a2) mit über ihre Flächen verteilten Düsenöffnungen (4) versehen sind.

9. Einrichtung nach Anspruch 7, **dadurch gekennzeichnet, dass** auf der der Form-Auswerfseite (I) entgegengesetzten Seite (II) des Form-Hohlraums (1.0) ein durch die Formwerkzeug-Wand (5b1) in den Form-Hohlraum (1.0) mündender Füllinjektor (3) für Granulat (1') angeordnet ist, welcher die Außenwand (5b2) des Formwerkzeugs (2) und die zweite Dampfkammer (5b) dampfdicht durchdringt.

10. Einrichtung nach einem der Ansprüche 6 bis 9, **dadurch gekennzeichnet, dass** an den Innenseiten der Außenwände (5a2, 5b2) des Formwerkzeugs (2) Sprühdüsen (17) befestigt sind, die zwecks Kühlung der Form (1), des Form-Hohlraumes (1.0) sowie des Volumens der Dampfkammern (5a, 5b) zum Versprühen von quer zu den Dampfkammern gerichteten Sprühkegeln (17a) eingerichtet sind.

11. Einrichtung nach Anspruch 10, **dadurch gekennzeichnet, dass** jeweils an der Innenseite der Formwerkzeug-Außenwände (5a2, 5b2) eine Sprühdüsen-Leitung (18) für mehrere Sprühdüsen (17) befestigt und mit der Sprühdüsen-Leitung (18) Sprühventile (19a, 19b) verbunden und an dieser befestigt sind.

## Claims

1. Method for the production of a moulded part (1) made from foamed plastic, in which a granulate (1') is poured into a mould cavity (1.0) of a mould (2) that is formed as a two-part or multi-part moulding tool (2a, 2b) that can be opened and closed, and is brought to expansion by heating, wherein
a) water vapour is brought into the evacuated mould (2) through openings arranged in the walls of the moulding tool, said openings being permeable for vapour and air, the water vapour having a temperature and steam moisture, as well as such a vapour pressure, such that the granulate (1') is heated by the water vapour and the condensation heat thereof to a temperature at which the granulate (1') expands and the mould (2) foams with the result of a homogeneous, moulded part (1) that has been sintered together;
b) then, after the expansion process, the condensed water and water vapour are drawn out by evacuating the mould (2) and the moulded part (1) and the latter is stabilised in this way and is cooled to the demoulding temperature, such that it can be ejected from the open mould (1), and wherein
c) the vapour supplied to the mould cavity (1.0) or guided away therefrom is fed through vapour chambers (5, 5a, 5b) that adjoin the outer surface of the mould (2), wherein,
during evacuation of the mould cavity (1.0) and the vapour chambers (5a, 5b) and for the initial purging of air quantities contained in said chambers by means of water vapour purging, this is carried out by steam valves (6a, 6b) and openings (4) that are permeable for vapour and air and that can be controlled in the moulding tool wall (5a1, 5b1), as well as controllable outlet valves and lines (8a, 8b; 9), and using a vacuum tank (10) having an injection cooler (13) of such a capacity that the evacuation and purging processes can be carried out autonomously with the vacuum tank (10) without support by vacuum pumps, and wherein the vapour and air quantities coming from the mould cavity (1.0) and the vapour chambers (5a, 5b) are guided into the vacuum tank (10) through at least one vapour/air line (9) communicating with the mould cavity (1.0) and the vapour chambers (5a, 5b) and connected to the vacuum tank (10), the vapour quantities are condensed by these by injecting cooling water with a vacuum being generated, and the introduced air quantities are discharged to the exterior via at least one non-return valve (14).

2. Method according to claim 1, **characterised in that**, during a first purging process by purging vapour quantities supplied to the mould cavity (1.0) and the vapour chambers (5a, 5b) on the inlet side, the air quantities contained in the mould cavity (1.0) and the vapour chambers (5a, 5b) are discharged into the vacuum tank (10) via the open outlet valves (8a, 8b) and the vapour/air line (9), and from here are discharged to the exterior via the at least one non-return valve (14), wherein, directly before the pouring of the granulate (1') into the mould cavity (1.0), with a time delay to the purging process, in the case of closing vapour valves (6a, 6b) by water injection into the vacuum tank (10), a water vapour condensation step and thus, within the framework of a first evacuation, negative pressure in the tank (10) and in the mould cavity (1.0) connected thereto, is brought about.

3. Method according to claim 1 or 2, **characterised in that**, during a second purging process after the pouring of the granulate (1') into the mould cavity (1.0), air quantities are first transported through inlet-side-supplied purging vapour quantities from the mould cavity (1.0) and the vapour chambers (5, 5a, 5b) via the openings (4) that are permeable for vapour and air, open outlet valves (8a, 8b) and the vapour/air line (9), to the vacuum tank (10), and are transported to the exterior via the non-return valve (14), before a negative pressure of up to 3 bars is generated in the mould cavity (1.0) and in the vapour chambers (5a, 5b) by vapour impact when the outlet valves (8a, 8b) are closed, and before, in collaboration with the vapour condensation heat, a softening temperature for the granulate (1') is generated.

4. Method according to one of claims 1 to 3, **characterised in that**, during a third purging process after the completed expansion of the granulate (1'), first the vapour valves (6a, 6b) are closed and the outlet valves (8a, 8b) are reopened in order to produce the connection to the vacuum tank (10), wherein the creation of an overpressure takes place by the non-return valve (14) and the vapour flowing into the vacuum tank (10) is brought to condensation by injecting cooling water into the vacuum tank (10), **in that** cooling water is sprayed into the vapour chambers (5a, 5b) via spraying nozzles (17) and is fed via the outlet valves and lines (8a, 8b; 9) into the vacuum tank (10) and is collected therein, wherein negative pressure in the vacuum tank (10) and in the mould cavity (1.0) that communicates therewith is caused (second evacuation) and the evaporating condensate contributes to the cooling of the expanded and stabilising moulded part (1), as well as discharging into the vacuum tank (10) in vapour form and being condensed there by means of injection cooling.

5. Method according to claim 4, **characterised in that** the vacuum (10) is maintained in one (5b) of the two vapour chambers (5a, 5b) and the outlet valves (8a, 8b) are closed, and that a vent valve (12a) of the vapour chamber (5a) opposite is then opened for the purpose of filling the latter with atmospheric air, and that, as part of a demoulding process, the outlet valves (8a, 8b) are closed and the following demoulding steps follow one another interchangeably:
a) the vacuum is maintained in the vapour chamber (5b) that is located on the side (II) of the filling injector (3), and the vapour chamber (5a) opposite is filled with atmospheric air, wherein the moulding tools (2a, 2b) are opened up to a gap of a few millimetres;
b) after the moulding tool (2) has been closed, the vent valve (12a) of the vapour chamber (5a) is closed and this is evacuated by connecting it to the vacuum tank (10) via the opening outlet valve (8a) and the injector-side vapour chamber (5b) is filled with atmospheric air via the corresponding vent valve (12b), wherein the moulding tool parts (2a, 2b) are opened up to a small gap of a few millimetres;
c) depending on the degree of loosening of the moulded part (1), the two steps (a) and (b) above are sufficient, or they are repeated until the moulded part (1) is released from both moulding tool parts (2a, 2b) and can then be ejected.

6. Device for carrying out the method according to claim 1 or according to one of the following claims for the production of a moulded part (1) made from foamed plastic, in which a granulate (1') that can be poured into the mould cavity (1.0) of a mould (2) that is formed in two parts or multiple parts and that can be opened and closed is brought to expansion by heating, wherein,
a) the mould (2) is connected to a filling injector (3) to pour in the granulate (1') that is to be foamed;
b) a vacuum device is connected to vapour chambers (5, 5a, 5b) that communicate with the mould cavity (1.0) via openings (4) that are permeable for vapour and air, inlet-side vapour valves (6a, 6b) and corresponding vapour lines (7, 7a, 7b), as well as air lines (9) with vent valves (12a, 12b), and furthermore on the outlet side via outlet valves (8a, 8b) and at least one vapour/air line (9), and each vapour chamber (5a, 5b) is allocated to a respective moulding tool part (2a, 2b) and these are arranged to adjoin the outer surfaces of the moulding tool parts (2a, 2b);
c) the mould (2) is at least in two parts and the mould cavity (1.0) enclosed by the moulding tool halves or parts (2a, 2b) can be opened to eject the completely foamed moulded part (1) and can be closed again for the purpose of loading new, expandable granulate (1'), wherein,
to evacuate the mould cavity (1.0) via the openings (4) that are permeable for vapour and air, and to evacuate the vapour chambers (5a, 5b), and for the respective prior purging of air quantities contained in the mould cavity (1.0) and in the vapour chambers (5a, 5b) by means of water vapour purging via vapour valves (6a, 6b) that can be opened and closed, a vacuum tank (10) having an injection cooler (13) of such a capacity that the evacuation and purging processes can be carried out autonomously with the vacuum tank (10) without support by vacuum pumps is used, and wherein the vapour and air quantities that come from the mould cavity (1.0) and the vapour chambers (5a, 5b) can be fed to the vacuum tank (10) through at least one vapour/air line (9) that communicates with the mould cavity (1.0) and the vapour chambers (5a, 5b) via controllable outlet valves (8a, 8b), the vapour quantities can be condensed by these by injecting cooling water with a vacuum being generated, and the air quantities introduced can be discharged to the exterior via at least one non-return valve (14).

7. Device according to claim 6, **characterised in that**, in the case of a two-part moulding tool (2), both moulding tool parts (2a, 2b) enclose a respective first and second vapour chamber (5a, 5b) and a respective inner wall (5a1, 5b1) of the vapour chambers is formed by the moulding tool walls that directly adjoin the mould cavity (1.0).

8. Device according to claim 7, **characterised in that** the moulding tool walls (5a1, 5a2) have nozzle openings (4) added to them that are distributed over their faces.

9. Device according to claim 7, **characterised in that** a filling injector (3) for granulate (1') that flows through the moulding tool wall (5b1) into the mould cavity (1.0) is arranged on the side (II) of the mould cavity (1.0) that lies opposite the mould ejection side (I), said injector penetrating the outer wall (5b2) of the moulding tool (2) and the second vapour chamber (5b) in a vapour-proof manner.

10. Device according to one of claims 6 to 9, **characterised in that** spraying nozzles (17) are fastened on the inner sides of the outer walls (5a2, 5b2) of the moulding tool (2), which are configured to spray the spray cones (17a) that are aligned transversely to the vapour chambers for the purpose of cooling the mould (1), the mould cavity (1.0) and the capacity of the vapour chambers (5a, 5b).

11. Device according to claim 10, **characterised in that** a spraying nozzle line (18) for several spraying nozzles (17) is fastened to the respective inner side of the moulding tool outer walls (5a2, 5b2) and spraying valves (19a, 19b) are connected to the spraying nozzle line (18) and are fastened thereto.

## Revendications

1. Procédé de production d'une pièce (1) moulée en matière plastique mousse, dans lequel on remplit une empreinte (1.0) d'un moule (2), constitué en outil (2a, 2b) de moulage en deux parties ou en plusieurs parties et pouvant s'ouvrir et se fermer, d'un granulé (1') que l'on fait s'expanser par chauffage, dans lequel
a) on introduit dans le moule (2) encore sous vide, par des ouvertures ménagées dans les parois de l'outil de moulage et perméables à la vapeur et à l'air, de la vapeur d'eau à une température et à une humidité ainsi qu'à une tension de vapeur telles, que le granulé est porté par la vapeur d'eau et sa chaleur de condensation a une température à laquelle le granulé (1') s'expanse et le moule (2) donne une mousse avec le résultat d'une pièce (1) moulée homogène et frittée ;
b) enfin après l'opération d'expansion, on retire l'eau condensée et la vapeur d'eau par mise sous vide du moule (2) et de la pièce (1) moulée et on stabilise cette dernière et on la refroidit à la température de démoulage, de manière à pouvoir l'expulser du moule (1) ouvert et dans lequel
c) on envoie la vapeur apportée à l'empreinte (1.0) du moule ou évacuée de celle-ci à des chambres (5, 5a, 5b) pour de la vapeur voisines de surfaces extérieures du moule (1), dans lequel
lors de la mise sous vide de l'empreinte (1.0) du moule et des chambres (5a,5b) pour de la vapeur et pour expulser précédemment par balayage des quantités d'air contenues dans les espaces mentionnés, au moyen d'un balayage par de la vapeur d'eau, par l'intermédiaire de vannes (6a, 6b) pour de la vapeur pouvant être commandée pour s'ouvrir et se fermer et par les ouvertures (4) perméables à de la vapeur et à de l'air dans la paroi (5a1, 5b1) de l'outil de moulage, ainsi que par l'intermédiaire de vannes pouvant être commandées et de conduits (8a, 8b ; 9) de sortie, on utilise une cuve (10) à vide ayant un refroidisseur (13) de projection d'une capacité telle que les opérations de mise sous vide et de balayage puissent être effectuées par la cuve (10) à vide en autarcie sans l'assistance de pompes à vide, et dans lequel, par au moins un conduit (9) pour de la vapeur/de l'air communiquant avec l'empreinte (1.0) du moule et avec les chambres (5a,5b) pour de la vapeur et raccordé à la cuve (10) à vide, on apporte à la cuve (10) à vide les quantités de vapeur et d'air provenant de l'empreinte (1.0) de moule et des chambres (5a,5b) pour la vapeur, on condense de celles-ci les quantités de vapeur par injection d'eau de refroidissement avec production de vide et on évacue à l'extérieur les quantités d'air introduites par au moins un clapet (14) anti-retour.

2. Procédé suivant la revendication 1, **caractérisé en ce que**, dans une première opération de balayage, on évacue les quantités de vapeur de balayage apportées du côté de l'entrée à l'empreinte (1.0) du moule et aux chambres (5a,5b) pour de la vapeur, les quantités d'air contenues dans l'empreinte (1.0) de moule et les chambres (5a, 5b) pour de la vapeur par les vannes (8a, 8b) de sortie ouvertes et par le conduit (9) pour de la vapeur/de l'air, dans la cuve (10) à vide et de celle-ci à l'extérieur par le au moins un clapet (14) anti-retour, dans lequel, juste avant de remplir l'empreinte (1.0) du moule du granulé (1'), on provoque, d'une manière retardée dans le temps par rapport à l'opération de balayage, alors que des vannes (6a, 6b) pour de la vapeur se ferment, par injection d'eau dans la cuve (10) à vide une condensation de vapeur d'eau et ainsi dans le cadre d'une première mise sous vide, une dépression dans la cuve (10) et dans l'empreinte (1.0) du moule qui y est relié.

3. Procédé suivant la revendication 1 ou 2, **caractérisé en ce que**, dans une deuxième opération de balayage, après avoir rempli l'empreinte (1.0) du moule du granulé (1'), on véhicule d'abord vers l'extérieur, par les ouvertures (4) perméables à de la vapeur et à de l'air, les vannes (8a, 8b) de sortie ouvertes et le conduit (9) pour de la vapeur/pour de l'air, dans la cuve (10) à vide et par le clapet (14) anti-retour à l'extérieur, des quantités d'air hors de l'empreinte (1.0) du moule et des chambres (5, 5a, 5b) pour de la vapeur par des quantités de vapeur de balayage apportées du côté de l'entrée, avant de produire dans l'empreinte (1.0) du moule et dans les chambres (5a, 5b) pour de la vapeur, alors que les vannes (8a, 8b) de sortie sont fermées, par une alimentation en vapeur, une surpression allant jusqu'à 3 bar et, en coopération avec la chaleur de condensation de la vapeur, une température de ramollissement du granulé (1').

4. Procédé suivant l'une des revendications 1 à 3, **caractérisé en ce que**, dans une troisième opération de balayage après que l'expansion du granulé (1) est terminée, on ferme d'abord les vannes (6a , 6b) pour de la vapeur et on ouvre à nouveau les vannes (8a, 8b) de sortie en vue d'établir la liaison à la cuve (10) à vide, dans lequel on met fin par le clapet (14) anti-retour à une surpression et on fait se condenser dans la cuve (10) à vide, par projection d'eau de refroidissement, la vapeur entrant dans la cuve (10) à vide, **en ce que** l'on projette par des buses (17) de projection de l'eau de refroidissement dans les chambres (5a, 5b) pour de la vapeur et on l'envoie dans la cuve (10) à vide par les vannes et conduits (8a ,8b ; 9) de sortie dans la cuve (10) à vide et on l'y rassemble, dans lequel on provoque une dépression dans la cuve (10) à vide et dans l'empreinte (1.0) du moule qui communique avec elle (deuxième mise sous vide) et le produit condensé qui s'évapore contribue au refroidissement de la pièce (1) moulée expansée et se stabilisant, ainsi qu'est évacuée sous forme de vapeur dans la cuve (10) à vide et y est condensée au moyen du refroidissement par projection.

5. Procédé suivant la revendication 4, **caractérisé en ce que** l'on maintient le vide dans l'une (5b) des deux chambres (5a, 5b) pour de la vapeur et on ferme les vannes (8a, 8b) de sortie et **en ce que**, ensuite, on ouvre une vanne (12a) d'alimentation en air de la chambre (5a) opposée pour de la vapeur en vue de remplir cette dernière d'air atmosphérique, et **en ce que**, dans le cadre d'une opération de démoulage, on ferme les vannes (8a ,8b) de sortie et l'on fait se succéder en alternance les stades de démoulage suivants :
a) on maintient le vide dans la chambre (5b) pour de la vapeur, qui se trouve du côté (2) de l'injecteur (3) de remplissage et on remplit d'air atmosphérique la chambre opposée (5a) pour de la vapeur, les outils (2a, 2b) de moulage étant ouverts jusqu'à un intervalle de quelques millimètres,
b) après la fermeture de l'outil (2) de moulage, on ferme la vanne (12a) d'alimentation en air de la chambre (5a) pour de la vapeur et on met celle-ci sous vide en faisant communiquer la cuve (10) à vide par la vanne (8a) de sortie qui s'ouvre et on remplit la chambre (5b) pour de la vapeur du côté de l'injecteur d'air atmosphérique par la vanne (12b) d'alimentation en air associé, les parties (2a, 2b) de l'outil de moulage étant ouvertes jusqu'à un intervalle petit de quelques millimètres,
c) suivant le degré de désagrégation de la pièce (1) moulée, les deux stades a) et b) précédents suffisent ou ils sont répétés jusqu'à ce que la pièce (1) moulée puisse être séparée des deux parties (2a ,2b) de l'outil de moulage et ensuite éjectée.

6. Dispositif pour effectuer le procédé suivant la revendication 1 ou l'une des revendications suivantes de production d'une pièce (1) moulée en matière plastique en mousse, dans lequel un granulé (1'), qui peut remplir une empreinte (1.0) d'un moule (2) en deux parties ou en plusieurs parties pouvant être ouvert ou fermé, est porté à s'expanser par chauffage, dans lequel
a) pour remplir le moule du granulé (1') à faire mousser, le moule (2) est relié à un injecteur (3) de remplissage,
b) des vannes (6a, 6b) pour de la vapeur du côté de l'entrée et des conduits (7 , 7a, 7b) pour de la vapeur, ainsi que des conduits (9) pour de l'air ayant des vannes (12a ,12b) d'alimentation en air sont raccordés à des chambres (5, 5a ,5b) pour de la vapeur communiquant avec l'empreinte (1.0) du moule par des ouvertures (4) perméables à de la vapeur et à de l'air et en outre un dispositif de mise sous vide est raccordé du côté de la sortie par des vannes (8a, 8b) de sortie et par au moins un conduit (9) pour de la vapeur et pour de l'air, et respectivement une chambre (5a, 5b) pour de la vapeur est associée à respectivement une partie (2a ,2b) de l'outil de moulage et les chambres sont disposées au voisinage des surfaces extérieures des parties (2a,2b) de l'outil de moulage,
c) le moule (2) au moins en deux parties et l'empreinte (1.0) du moule entourée par les moitiés ou parties (2a ,2b) de l'outil de moulage peuvent, pour l'éjection de la pièce (1) moulée en mousse finie, être ouverts et, en vue de charger du granulé (1') nouveau pouvant s'expanser, refermer, dans lequel pour la mise sous vide de l'empreinte (1.0) du moule par l'intermédiaire des ouvertures (4) perméables à la vapeur et à l'air et des chambres (5a , 5b) pour la vapeur, et pour le balayage respectivement précédent de quantités d'air contenues dans l'empreinte (1.0) du moule et dans les chambres (5a, 5b) pour de la vapeur, au moyen d'un balayage par de la vapeur d'eau par l'intermédiaire de vannes (6a, 6b) pour de la vapeur qui peuvent s'ouvrir et se fermer, est utilisée une cuve (10) à vide, ayant un refroidisseur (13) de projection d'une capacité telle que les opérations de mise sous vide et de balayage peuvent s'effectuer par la cuve (10) à vide en autarcie sans assistance de pompes à vide et dans lequel, par au moins un conduit (9) pour de la vapeur et pour de l'air, communiquant par des vannes (8a ,8b) de sortie pouvant être commandées avec l'empreinte (1.0) du moule et les chambres (5a , 5b) pour de la vapeur, des quantités de vapeur et d'air provenant de l'empreinte (1.0) du moule et des chambres (5a, 5b) pour de la vapeur peuvent être apportées à la cuve (10) à vide, de celles-ci les quantités de vapeur peuvent être condensées avec production de vide par injection d'eau de refroidissement et les quantités d'air injectées peuvent être évacuées vers l'extérieur par au moins un clapet (14) anti-retour.

7. Dispositif suivant la revendication 6, **caractérisé en ce que**, pour un outil (2) de moulage en deux parties, les deux parties (2a ,2b) de l'outil de moulage entourent respectivement une première et une deuxième chambres (5a ,5b) pour de la vapeur et respectivement une paroi (5a1, 5b1) intérieure des chambres pour de la vapeur et formées par les parois de l'outil de moulage directement voisine de l'empreinte (1.0) du moule.

8. Dispositif suivant la revendication 7, **caractérisé en ce que** les parois (5a1, 5a2) de l'outil de moulage sont pourvues d'ouvertures (4) de buse réparties sur leur surface.

9. Dispositif suivant la revendication 7, **caractérisé en ce que** du côté (II), opposé au côté (I) d'expulsion de l'empreinte (1.0) du moule, est disposé un injecteur (3) de remplissage de granulés (1'), qui débouche en traversant la paroi (5b1) de l'outil de moulage dans l'empreinte (1.0) du moule et qui traverse d'une manière étanche à la vapeur la paroi (5b2) extérieure de l'outil (2) de moulage et la deuxième chambre (5b) pour de la vapeur.

10. Dispositif suivant l'une des revendications 6 à 9, **caractérisé en ce que**, sur les faces intérieures des parois (5a2, 5b2) extérieures de l'outil (2) de moulage sont fixées des buses (17) de projection qui, en vue de refroidir le moule (1), l'empreinte (1.0) de moulage, ainsi que le volume des chambres (5a ,5b) pour de la vapeur, sont dirigés pour la projection de cônes (17a) de projection dirigée transversalement aux chambres pour de la vapeur.

11. Dispositif suivant la revendication 10, **caractérisé en ce que**, sur la face intérieure des parois (5a2, 5b2) extérieures de l'outil de moulage est fixé un conduit (18) de buse de projection pour plusieurs buses (17) de projection et au conduit (18) de buse de projection sont reliés des vannes (19a ,19b) de projection qui y sont fixées.
